(19) Europäisches Patentamt
European Patent Office
Office européen des brevets

(11) **EP 4 435 539 A1**

(12) **EUROPEAN PATENT APPLICATION**
published in accordance with Art. 153(4) EPC

(43) Date of publication:
**25.09.2024   Bulletin 2024/39**

(51) International Patent Classification (IPC):
**G05B 19/05** (2006.01)

(21) Application number: **22891918.9**

(86) International application number:
**PCT/CN2022/130121**

(22) Date of filing: **04.11.2022**

(87) International publication number:
**WO 2023/083123 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.11.2021   CN 202111348769**

(71) Applicant: **CCCC Third Harbor Engineering Co.,
Ltd.
Shanghai 200032 (CN)**

(72) Inventors:
• **LI, Jing**
  **Shanghai 200032 (CN)**
• **XIA, Yue**
  **Shanghai 200032 (CN)**
• **LI, Yazhou**
  **Shanghai 200032 (CN)**
• **ZHANG, Jibiao**
  **Shanghai 200032 (CN)**
• **ZHENG, Bo**
  **Shanghai 200032 (CN)**
• **WANG, Zijian**
  **Shanghai 200032 (CN)**
• **GU, Minming**
  **Shanghai 200032 (CN)**
• **TENG, Yanhua**
  **Shanghai 200032 (CN)**

(74) Representative: **Wohlfahrt, Jan Günther et al
Gleiss Große Schrell und Partner mbB
Patentanwälte Rechtsanwälte
Leitzstraße 45
70469 Stuttgart (DE)**

(54) **LEVELING CONTROL SYSTEM AND METHOD IN OFFSHORE MOUNTING OF THREE-BUCKET JACKET FOUNDATION**

(57)    Provided is a leveling control system in the offshore mounting of a three-bucket jacket foundation, comprising: a position and posture monitoring system mounted on the top of the three-bucket jacket foundation and used for monitoring GPS coordinates and inclination information of the top of the three-bucket jacket foundation in real time; a master station control system for performing analysis processing on the GPS coordinates and the inclination information and outputting a corresponding control signal; and an underwater action system for controlling corresponding actions of action components of the three-bucket jacket foundation according to the control signal, so as to separately control pressure differences between the interiors and exteriors of three buckets of the three-bucket jacket foundation. Further provided is a leveling control method based on the leveling control system. It can be ensured that the degree of inclination of the top surface of a jacket does not exceeds a design value during the whole process of sinking, such that the safety and success rate of construction are ensured.

FIG. 1

EP 4 435 539 A1

**Description**

TECHNICAL FIELD

The present invention relates to the technical field of leveling control of a three-bucket jacket foundation.

BACKGROUND ART

The bucket foundation is a non-penetrating shallow foundation with large diameter and small height, usually adopts suction sinking, and is relatively economical from the perspective of engineering exploration cost and steel consumption. The use of pressure differential sinking technology breaks the traditional concept of using pile hammer for pile foundation, does not consider the requirement of stability strength for pile foundation when the water depth is large, and avoids the problem of high mounting and construction cost of pile driving boat in deep water areas. Whether the bucket foundation can sink to a design depth during sinking construction and the attitude control during the sinking process are the decisive factors for success. If the bucket foundation fails to sink, cannot sink to a design depth, or after the end of sinking, the degree of inclination of the top of a jacket exceeds a design criterion, both stability and bearing capacity of the bucket foundation will be greatly affected. Therefore, it is particularly important to develop a targeted leveling control system and method.

SUMMARY

The objective of the present invention is to provide a leveling control system in the offshore mounting of a three-bucket jacket foundation and a control method thereof, and it can be ensured that the degree of inclination of the top surface of a jacket does not exceeds a design value during the whole process of sinking, such that the safety and success rate of construction are ensured.

The purpose of the present invention is achieved by providing:

a leveling control system in the offshore mounting of a three-bucket jacket foundation, comprising:

a position and posture monitoring system mounted on the top of the three-bucket jacket foundation and used for monitoring GPS coordinates and inclination information of the top of the three-bucket jacket foundation in real time;

a master station control system for performing analysis processing on the GPS coordinates and the inclination information and outputting a control signal; and

an underwater action system for controlling corresponding actions of action components of the three-bucket jacket foundation according to the control signal, so as to separately control pressure differences between the interiors and exteriors of three buckets of the three-bucket jacket foundation.

Preferably, the position and posture monitoring system comprises:

an inclinometer used for collecting the inclination information of the top of the three-bucket jacket foundation;

a GPS controller used for collecting the GPS coordinates of the top of the three-bucket jacket foundation;

a first PLC used for controlling a warning light;

a first serial server connected to the inclinometer and used for transmitting the inclination information;

a first switch for connecting the GPS controller, the first PLC and the first serial server to the network; and

a first wireless AP connected to the first switch and used for performing wireless communication with the master station control system.

Preferably, the position and posture monitoring system further comprises: a battery, a solar panel and a photovoltaic controller;

wherein the solar panel charges the battery through the photovoltaic controller; and

the battery supplies power to the first serial server, the first PLC and the GPS controller through the photovoltaic controller.

Preferably, the master station control system comprises: a second wireless AP, a second PLC, an upper computer, an operation panel, a second switch, a second serial server and frequency converters, wherein

the second wireless AP receives the inclination information and the GPS coordinates from the position and posture monitoring system and transmits to the second PLC through the second switch;

the second PLC obtains elevation data and real-time data of height differences of the top surfaces of the three buckets according to the inclination information and the GPS coordinates and presents the data to the upper computer;

the upper computer or the operation panel sends a switch control signal and a frequency conversion control signal to the second PLC; and

on the one hand, the second PLC sends the switch control signal to the underwater action system through the second switch, on the other hand, the second PLC sends the frequency conversion control signal to the frequency converters through the second switch and the second serial server; the frequency converters output a speed control signal according to the frequency conversion control signal and send the signal to the underwater action system through the second serial server and the second switch.

Preferably, action components comprise a plurality of solenoid valves, water pumps and hydraulic pumps which are subordinate to the three buckets separately, and the underwater action system comprises a third PLC and a third switch;

the third PLC is separately connected to the third switch, and the plurality of the solenoid valves, water pumps and hydraulic pumps;

the third PLC receives the switch control signal and the speed control signal through the third switch;

the third PLC controls on/off of the solenoid valves and the hydraulic pumps according to the switch control signal; and

the third PLC controls speeds of the water pumps according to the speed control signal.

The present invention also provides a leveling control method for above leveling control system in the offshore mounting of a three-bucket jacket foundation, comprising the following steps:

a switch control signal and a frequency conversion control signal are manually sent through the upper computer or the operation panel;

if all the height differences of the tops of the three buckets are < 2.5 cm, the three water pumps simultaneously work at the same frequency, and the frequency meets the sinkability and is less than a limit; if the height difference of the top between a bucket and the lowest bucket is > 2.5 cm and ≤ 5 cm, the frequency of the water pump of the bucket is increased; if the height difference of the top between a bucket and the lowest bucket is > 2.5 cm, the three water pumps are stopped; if the height difference between the remaining two buckets is < 1 cm, the water pump of the bucket is turned on separately and the frequency is increased until the height difference between the bucket and the lowest bucket is < 1 cm; if the height difference between the remaining two buckets is > 1 cm, the water pump of the bucket is turned on separately and the frequency is increased until the height difference between the bucket and the medium bucket is < 1 cm, and then the water pumps of the bucket and the medium bucket are turned on and the frequency is increased until all the height differences of the tops of the three buckets are < 1 cm; and pressure differences between the interiors and exteriors of the three buckets are separately controlled by controlling the speeds of the water pumps.

The present invention also provides a leveling control method for the leveling control system in the offshore mounting of a three-bucket jacket foundation of claim 5, comprising the following steps:

the upper computer automatically sends a switch control signal and a frequency conversion control signal;

when the buckets are in the negative pressure sinking state, the frequency of the frequency converter close to the low bucket is reduced to slow down a sinking speed, and sinking at the same speed is continued after other buckets reach the same depth;

frequency control of the frequency converters in automatic leveling adopts a method of proportional control, and proportional controller outputs of the three buckets are as follows:

when $err_x(t) > 0$ , $err_y(t) > 0$,

$$\begin{cases} u_A(t) = u_0 \\ u_B(t) = -\sqrt{3}K_p \times err_x(t) - K_p \times err_y(t) + u_0 \\ u_C(t) = -K_p \times err_y(t) + u_0 \end{cases};$$

when $err_x(t) < 0$, $err_y(t) > 0$,

$$\begin{cases} u_A(t) = u_0 \\ u_B(t) = -K_p \times err_y(t) + u_0 \\ u_C(t) = \sqrt{3}K_p \times err_x(t) - K_p \times err_y(t) + u_0 \end{cases},$$

when $err_x(t) > 0$ , $err_y(t) < 0$,

$$\begin{cases} u_A(t) = 2K_p \times err_y(t) + u_0 \\ u_B(t) = -\sqrt{3}K_p \times err_x(t) + u_0 \\ u_C(t) = u_0 \end{cases};$$

when $err_x(t) < 0$, $err_y(t) < 0$,

$$\begin{cases} u_A(t) = 2K_p \times err_y(t) + u_0 \\ u_B(t) = u_0 \\ u_C(t) = \sqrt{3}K_p \times err_x(t) + u_0 \end{cases},$$

wherein, $u(t)$ is proportional controller outputs, i.e., frequency outputs of the frequency converters, $K_p$ is a proportional gain, $err(t)$ is an instantaneous error at time t, i.e., inclinometer reading, and $u_0$ is a controller output without errors, i.e., frequency of the frequency converters before an inclination occurs; A, B and C represent three buckets; x and y represent two axes of a biaxial inclinometer for collecting inclination information; and pressure differences between the interiors and exteriors of the three buckets are separately controlled by controlling the speeds of the water pumps.

The present invention features the following beneficial effects: The present invention ensures that the degree of inclination of the top surface of a jacket does not exceeds a design value during the whole process of sinking, such that the safety and success rate of construction are ensured; when there are height differences among the three buckets, the on/off of solenoid valves and the speed of water pumps are controlled, the seawater in the buckets is discharged, and the pressure differences between the interiors and exteriors of the buckets are controlled, such that the three buckets sink at different rates to achieve the purpose of leveling. The operation panel makes operation easier and faster; the upper computer screen can contain the monitoring data required in the suction sinking process; the introduction of automatic leveling method improves the construction efficiency, reduces the workload of workers, and ensures a more accurate posture control, optimizing the overall construction method.

BRIEF DESCRIPTION OF THE DDRAWINGS

FIG. 1 is a structure view of a position and posture monitoring system in the present invention.
FIG. 2 is a structure view of a master station control system in the present invention.
FIG. 3 is a structure view of an underwater action system in the present invention.
FIG. 4 is a flow chart of a suction sinking leveling strategy during manual leveling in the present invention.
FIG. 5 is a top view of a tower top of a three-bucket jacket foundation in the present invention.

DETAILED DESCRIPTION OF THE EMBODIMENTS

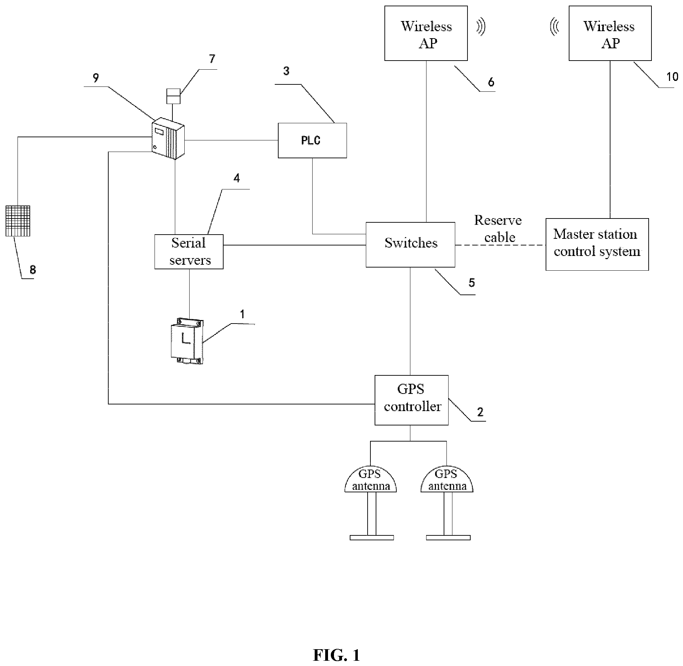

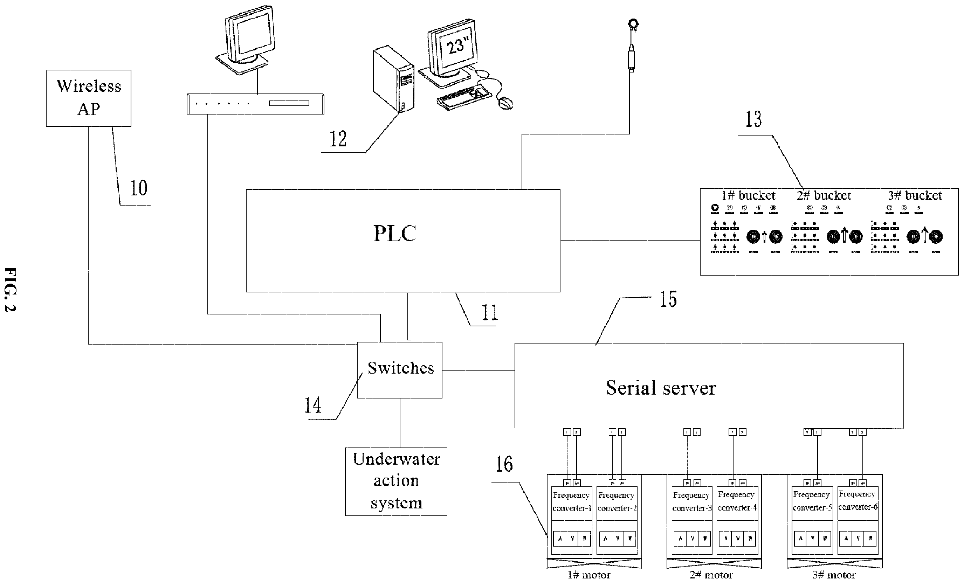

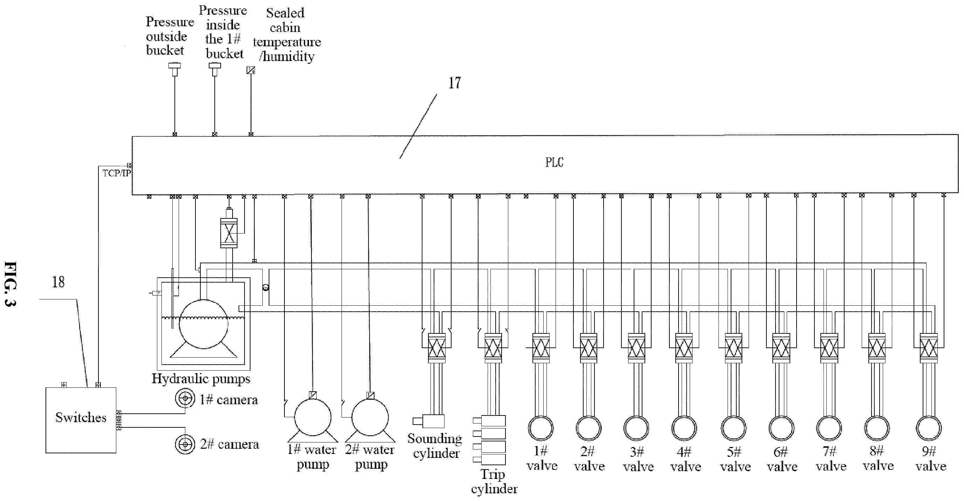

The present invention will be further described below in combination with accompanying drawings.
As shown in FIGS. 1-3, the leveling control system in the offshore mounting of a three-bucket jacket foundation of the present invention includes a position and posture monitoring system, a master station control system and an underwater action system.
The position and posture monitoring system is mounted on the top of the three-bucket jacket foundation and used for monitoring GPS coordinates and inclination information of the top of the three-bucket jacket foundation in real time and providing data for leveling. The master station control system performs analysis processing on the GPS coordinates and the inclination information and outputs a control signal. The underwater action system controls corresponding actions of action components of the three-bucket jacket foundation according to the control signal, so as to separately control pressure differences between the interiors and exteriors of three buckets of the three-bucket jacket foundation, such that the three buckets sink at different rates to achieve the purpose of leveling. The action components include a plurality of solenoid valves, water pumps and hydraulic pumps which are subordinate to the three buckets separately.

The position and posture monitoring system includes: an inclinometer 1, a GPS controller 2, a first PLC 3, a first serial server 4, a first switch 5, a first wireless AP 6, a battery 7, a solar panel 8 and a photovoltaic controller 9.

The inclinometer 1 is used for collecting the inclination information of the top of the three-bucket jacket foundation. The GPS controller 2 is used for collecting the GPS coordinates of the top of the three-bucket jacket foundation. The inclination information is used for obtaining real-time data of height differences of the top surfaces of the three buckets, and the GPS data are used for judging whether the tower top reaches a design elevation. The first PLC 3 is used for controlling a warning light. The first serial server is connected to the inclinometer 1 and used for transmitting the inclination information. The first switch 5 connects the GPS controller 2, the first PLC 3 and the first serial server 4 to the network. The first wireless AP 6 is connected to the first switch 5 and used for performing wireless communication with the master station control system. The solar panel 8 charges the battery 7 through the photovoltaic controller 9; the battery 7 supplies power to the first serial server 4, the first PLC 3 and the GPS controller 2 through the photovoltaic controller 9.

The master station control system includes: a second wireless AP 10, a second PLC 11, an upper computer 12, an operation panel 13, a second switch 14, a second serial server 15 and frequency converters 16.

The second wireless AP 10 receives the inclination information and the GPS coordinates from the position and posture monitoring system and transmits to the second PLC 11 through the second switch 14. The second PLC 11 obtains elevation data and real-time data of height differences of the top surfaces of the three buckets according to the inclination information and the GPS coordinates and presents the data to the upper computer 12.

The upper computer 12 or the operation panel 13 sends a switch control signal and a frequency conversion control signal to the second PLC 11. That is, it is divided into a manual leveling method and an automatic leveling method, and the manual leveling method is to send a control command to the underwater action system through buttons and operating handles on the upper computer 12 or the operation panel 13, and adjust the frequency of the frequency converters according to a manual sinking leveling strategy to achieve the purpose of leveling. The automatic leveling method is to calculate the frequency of frequency converters required for leveling in real time for control through a method of proportional control, according to the data of x and y axes of the inclinometer, by means of the upper computer 12, so as to achieve the purpose of leveling.

On the one hand, the second PLC 11 sends the switch control signal to the underwater action system through the second switch 14, on the other hand, the second PLC 11 sends the frequency conversion control signal to the frequency converters 16 through the second switch 14 and the second serial server 15; the frequency converters 16 output a speed control signal according to the frequency conversion control signal and send the signal to the underwater action system through the second serial server 15 and the second switch 14.

The underwater action system includes a third PLC 17 and a third switch 18. The third PLC 17 is separately connected to the third switch, and the plurality of the solenoid valves, water pumps and hydraulic pumps.

The third PLC 17 receives the switch control signal and the speed control signal through the third switch 18; the third PLC 17 controls on/off of the solenoid valves and the hydraulic pumps according to the switch control signal; and the third PLC 17 controls speeds of the water pumps according to the speed control signal. Thus, the seawater in the buckets is extracted, such that the pressures inside the buckets are less than the pressures outside the buckets, and the negative pressure bucket sinks.

The hydraulic pumps are started to start a suction sinking stage.

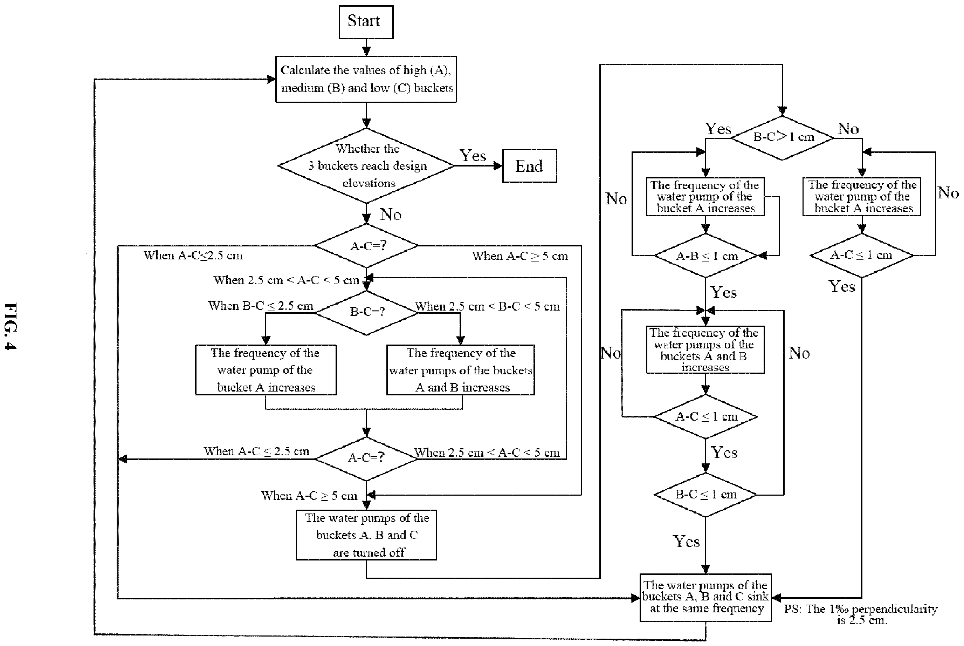

As shown in FIG. 4, the leveling control method based on the leveling control system in the offshore mounting of a three-bucket jacket foundation of the present invention includes the following steps:

1) a switch control signal and a frequency conversion control signal are manually sent through the upper computer 12 or the operation panel 13;

2) according to a specific size of the three-bucket jacket and analysis results of structural stress, it is determined that the perpendicularity of the top surface of the jacket does not exceed 5 cm during the sinking process, and a manual leveling process is designed on this basis: if all the height differences of the tops of the three buckets are < 2.5 cm, the three water pumps simultaneously work at the same frequency, and the frequency meets the sinkability and is less than a limit; if the height difference of the top between a bucket and the lowest bucket is > 2.5 cm and ≤ 5 cm, the frequency of the water pump of the bucket is increased; if the height difference of the top between a bucket and the lowest bucket is > 2.5 cm, the three water pumps are stopped; if the height difference between the remaining two buckets is < 1 cm, the water pump of the bucket is turned on separately and the frequency is increased until the height difference between the bucket and the lowest bucket is < 1 cm; if the height difference between the remaining two buckets is > 1 cm, the water pump of the bucket is turned on separately and the frequency is increased until the height difference between the bucket and the medium bucket is < 1 cm, and then the water pumps of the bucket and the medium bucket are turned on and the frequency is increased until all the height differences of the tops of the three buckets are < 1 cm; and

3) pressure differences between the interiors and exteriors of the three buckets are separately controlled by controlling the speeds of the water pumps.

The leveling control method based on the leveling control system in the offshore mounting of a three-bucket jacket foundation of the present invention includes the following steps:

1) The upper computer 12 generates and automatically sends a switch control signal and a frequency conversion control signal according to elevation data and real-time data of height differences of the top surfaces of the three buckets.

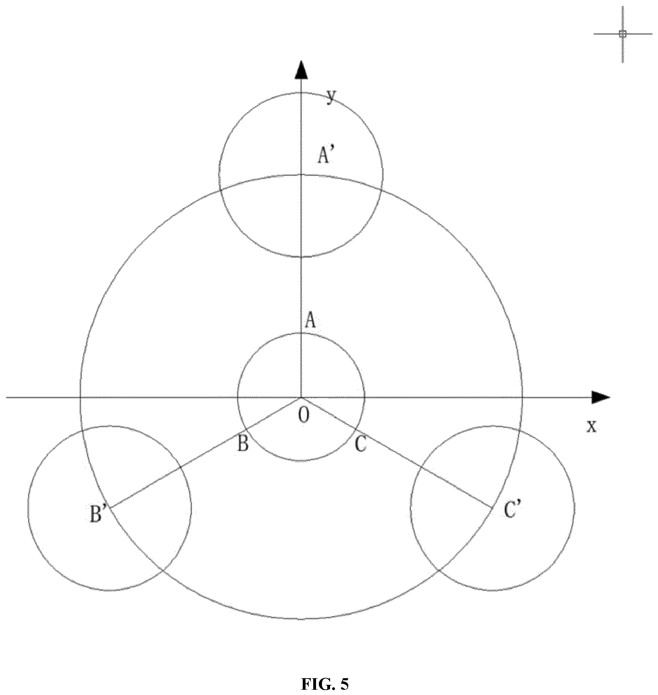

2) FIG. 5 is a top view of a tower top of a jacket, wherein 0 is a center of circle of the tower top of the jacket, three points of A', B' and C' are centers of circles of the top surfaces of three suction buckets, the inclinometer is mounted on the tower top of the jacket and is a biaxial inclinometer, and the positive direction of its y-axis is parallel to the OA' direction. It can be seen that if the y-axis reading of the inclinometer is not 0, the bucket A is inclined relative to the other two buckets: if the reading is positive, the bucket A is upper relative to the other two buckets, and the greater the value, the greater the deviation; if the reading is negative, the bucket A is lower relative to the other two buckets, and the greater the absolute value, the greater the deviation. If the x-axis reading of the inclinometer is not 0, there is an inclination between the buckets B and C: if the reading is positive, the bucket C is upper relative to the bucket B, and the greater the value, the greater the deviation; if the reading is negative, the bucket C is lower relative to the bucket B, and the greater the absolute value, the greater the deviation.

When the suction buckets are in the negative pressure sinking state, each bucket has two frequency converters to control the water pumps to extract the water in the buckets at different rates by changing the output frequency, pressure differences between the interiors and exteriors of the buckets make the suction buckets to penetrate downward, therefore, the frequency of the frequency converters is positively correlated with the pressure difference, and the greater the frequency, the greater the generated pressure difference. A pressure difference/depth control limit should be followed during the sinking process, that is, a certain pressure difference value should not be broken at the current depth, and this value can be obtained through early calculation. Therefore, during automatic leveling, a sinking speed should not be accelerated relying on the frequency of the frequency converter of the larger upper bucket to achieve the purpose of leveling, to prevent breaking the pressure difference control limit, and the frequency of the frequency converter of the low bucket should be reduced to slow down the sinking speed, and sinking at the same speed is continued after other buckets reach the same depth. Then, when the y-axis of the inclinometer is positive, the frequency of the frequency converters of the buckets B and C is reduced; when the y-axis of the inclinometer is negative, the frequency of the frequency converter of the bucket A is reduced; when the x-axis of the inclinometer is positive, the frequency of the frequency converter of the bucket B is reduced; when the y-axis of the inclinometer is negative, the frequency of the frequency converter of the bucket C is reduced.

The frequency control of the frequency converters in automatic leveling adopts a method of proportional control. The proportional control is a linear feedback control system. In the proportional control algorithm, the controller output is equal to the multiple of an error signal, and the error signal is the difference between the target value and the variable, i.e., the difference between the inclinometer reading and 0 degree, and the specific formula is as follows:

$$u(t) = K_p \times err(t) + u_0$$

where $u(t)$ is proportional controller outputs, i.e., frequency outputs of the frequency converters, $K_p$ is a proportional gain, $err(t)$ is an instantaneous error at time t, i.e., inclinometer reading, and $u_0$ is a controller output without errors, i.e., frequency of the frequency converters before an inclination occurs.

According to the sinking requirements of the suction buckets and the positions of the three buckets, the corrected proportional controller outputs of the three buckets are as follows:

when $err_x(t) > 0$, $err_y(t) > 0$,

$$\begin{cases} u_A(t) = u_0 \\ u_B(t) = -\sqrt{3}K_p \times err_x(t) - K_p \times err_y(t) + u_0 \\ u_C(t) = -K_p \times err_y(t) + u_0 \end{cases} ;$$

when $err_x(t) < 0$, $err_y(t) > 0$,

$$\begin{cases} u_A(t) = u_0 \\ u_B(t) = -K_p \times err_y(t) + u_0 \\ u_C(t) = \sqrt{3}K_p \times err_x(t) - K_p \times err_y(t) + u_0 \end{cases} ;$$

when $err_x(t) > 0$, $err_y(t) < 0$,

$$\begin{cases} u_A(t) = 2K_p \times err_y(t) + u_0 \\ u_B(t) = -\sqrt{3}K_p \times err_x(t) + u_0 \\ u_C(t) = u_0 \end{cases} ;$$

when $err_x(t) < 0$, $err_y(t) < 0$,

$$\begin{cases} u_A(t) = 2K_p \times err_y(t) + u_0 \\ u_B(t) = u_0 \\ u_C(t) = \sqrt{3}K_p \times err_x(t) + u_0 \end{cases} .$$

The corrected controller output frequency is separately inputted to the frequency converters of the three buckets, the speeds of the water pumps in the underwater action system are controlled by the frequency converters, so as to separately control pressure differences between the interiors and exteriors of the three buckets, such that the three buckets sink at different rates to achieve the purpose of leveling.

The above-mentioned embodiments are used only for describing, rather than limiting, the present invention. Various changes or modifications may also be made by those skilled in the art on the basis of not deviating from the spirit and scope of the present invention; therefore, all equivalent technical solutions should also fall into the scope of the present invention and should be limited by the claims.

## Claims

1.   A leveling control system in the offshore mounting of a three-bucket jacket foundation, comprising:

a position and posture monitoring system mounted on the top of the three-bucket jacket foundation and used for monitoring GPS coordinates and inclination information of the top of the three-bucket jacket foundation in real time;
a master station control system for performing analysis processing on the GPS coordinates and the inclination information and outputting a control signal; and
an underwater action system for controlling corresponding actions of action components of the three-bucket jacket foundation according to the control signal, so as to separately control pressure differences between the interiors and exteriors of three buckets of the three-bucket jacket foundation.

2.   The leveling control system in the offshore mounting of a three-bucket jacket foundation of claim 1, wherein the position and posture monitoring system comprises:

an inclinometer used for collecting the inclination information of the top of the three-bucket jacket foundation;

a GPS controller used for collecting the GPS coordinates of the top of the three-bucket jacket foundation;
a first PLC used for controlling a warning light;
a first serial server connected to the inclinometer and used for transmitting the inclination information;
a first switch for connecting the GPS controller, the first PLC and the first serial server to the network; and
a first wireless AP connected to the first switch and used for performing wireless communication with the master station control system.

3. The leveling control system in the offshore mounting of a three-bucket jacket foundation of claim 2, wherein the position and posture monitoring system further comprises: a battery, a solar panel and a photovoltaic controller;

wherein the solar panel charges the battery through the photovoltaic controller; and
the battery supplies power to the first serial server, the first PLC and the GPS controller through the photovoltaic controller.

4. The leveling control system in the offshore mounting of a three-bucket jacket foundation of claim 1, wherein the master station control system comprises: a second wireless AP, a second PLC, an upper computer, an operation panel, a second switch, a second serial server and frequency converters, wherein

the second wireless AP receives the inclination information and the GPS coordinates from the position and posture monitoring system and transmits to the second PLC through the second switch;
the second PLC obtains elevation data and real-time data of height differences of the top surfaces of the three buckets according to the inclination information and the GPS coordinates and presents the data to the upper computer;
the upper computer or the operation panel sends a switch control signal and a frequency conversion control signal to the second PLC; and
on the one hand, the second PLC sends the switch control signal to the underwater action system through the second switch, on the other hand, the second PLC sends the frequency conversion control signal to the frequency converters through the second switch and the second serial server; the frequency converters output a speed control signal according to the frequency conversion control signal and send the signal to the underwater action system through the second serial server and the second switch.

5. The leveling control system in the offshore mounting of a three-bucket jacket foundation of claim 4, wherein action components comprise a plurality of solenoid valves, water pumps and hydraulic pumps which are subordinate to the three buckets separately, and the underwater action system comprises a third PLC and a third switch;

the third PLC is separately connected to the third switch, and the plurality of the solenoid valves, water pumps and hydraulic pumps;
the third PLC receives the switch control signal and the speed control signal through the third switch;
the third PLC controls on/off of the solenoid valves and the hydraulic pumps according to the switch control signal; and
the third PLC controls speeds of the water pumps according to the speed control signal.

6. A leveling control method for the leveling control system in the offshore mounting of a three-bucket jacket foundation of claim 5, comprising the following steps:

a switch control signal and a frequency conversion control signal are manually sent through the upper computer or the operation panel;
if all the height differences of the tops of the three buckets are < 2.5 cm, the three water pumps simultaneously work at the same frequency, and the frequency meets the sinkability and is less than a limit; if the height difference of the top between a bucket and the lowest bucket is > 2.5 cm and ≤ 5 cm, the frequency of the water pump of the bucket is increased; if the height difference of the top between a bucket and the lowest bucket is > 2.5 cm, the three water pumps are stopped; if the height difference between the remaining two buckets is < 1 cm, the water pump of the bucket is turned on separately and the frequency is increased until the height difference between the bucket and the lowest bucket is < 1 cm; if the height difference between the remaining two buckets is > 1 cm, the water pump of the bucket is turned on separately and the frequency is increased until the height difference between the bucket and the medium bucket is < 1 cm, and then the water pumps of the bucket and the medium bucket are turned on and the frequency is increased until all the height differences of the tops of the three buckets are < 1 cm; and

pressure differences between the interiors and exteriors of the three buckets are separately controlled by controlling the speeds of the water pumps.

7. A leveling control method for the leveling control system in the offshore mounting of a three-bucket jacket foundation of claim 5, comprising the following steps:

the upper computer automatically sends a switch control signal and a frequency conversion control signal;
when the buckets are in the negative pressure sinking state, the frequency of the frequency converter close to the low bucket is reduced to slow down a sinking speed, and sinking at the same speed is continued after other buckets reach the same depth;
frequency control of the frequency converters in automatic leveling adopts a method of proportional control, and proportional controller outputs of the three buckets are as follows:

when $err_x(t) > 0$ , $err_y(t) > 0$,

$$\begin{cases} u_A(t) = u_0 \\ u_B(t) = -\sqrt{3}K_p \times err_x(t) - K_p \times err_y(t) + u_0 \\ u_C(t) = -K_p \times err_y(t) + u_0 \end{cases} ;$$

when $err_x(t) < 0$ , $err_y(t) > 0$,

$$\begin{cases} u_A(t) = u_0 \\ u_B(t) = -K_p \times err_y(t) + u_0 \\ u_C(t) = \sqrt{3}K_p \times err_x(t) - K_p \times err_y(t) + u_0 \end{cases} ;$$

when $err_x(t) > 0$ , $err_y(t) < 0$,

$$\begin{cases} u_A(t) = 2K_p \times err_y(t) + u_0 \\ u_B(t) = -\sqrt{3}K_p \times err_x(t) + u_0 \\ u_C(t) = u_0 \end{cases} ;$$

when $err_x(t) < 0$ , $err_y(t) < 0$,

$$\begin{cases} u_A(t) = 2K_p \times err_y(t) + u_0 \\ u_B(t) = u_0 \\ u_C(t) = \sqrt{3}K_p \times err_x(t) + u_0 \end{cases} ;$$

wherein, $u(t)$ is proportional controller outputs, i.e., frequency outputs of the frequency converters, $K_p$ is a proportional gain, $err(t)$ is an instantaneous error at time t, i.e., inclinometer reading, and $u_0$ is a controller output without errors, i.e., frequency of the frequency converters before an inclination occurs; A, B and C represent three buckets; x and y represent two axes of a biaxial inclinometer for collecting inclination information; and
pressure differences between the interiors and exteriors of the three buckets are separately controlled by controlling the speeds of the water pumps.

**FIG. 1**

**FIG. 2**

FIG. 3

**FIG. 4**

**FIG. 5**

## INTERNATIONAL SEARCH REPORT

| International application No. |
|---|
| **PCT/CN2022/130121** |

**A. CLASSIFICATION OF SUBJECT MATTER**

G05B19/05(2006.01)i

According to International Patent Classification (IPC) or to both national classification and IPC

**B. FIELDS SEARCHED**

Minimum documentation searched (classification system followed by classification symbols)

IPC: G05B19/-

Documentation searched other than minimum documentation to the extent that such documents are included in the fields searched

Electronic data base consulted during the international search (name of data base and, where practicable, search terms used)

CNTXT, ENTXTC, DWPI, ENTXT, VEN: 变频, 导管架, 调平, 多, 海上, 倾角仪, 桶, 位置, 姿态, 采集, 监测, 调节, 高度, 压差, GPS, PLC, barrel, catheter, frame, position, attitude, inclinometer, variable frequency, posture, inclination angle, wireless AP, multi-cylinder, collect, leveling, adjust, height, pressure

**C. DOCUMENTS CONSIDERED TO BE RELEVANT**

| Category* | Citation of document, with indication, where appropriate, of the relevant passages | Relevant to claim No. |
|---|---|---|
| Y | CN 110080261 A (CCCC THIRD HARBOR ENGINEERING CO., LTD. et al.) 02 August 2019 (2019-08-02) <br> description, paragraphs [0024]-[0039], and figures 1-2 | 1-7 |
| Y | CN 113585362 A (SHANGHAI YISITE OCEAN ENGINEERING TECHNOLOGY CO., LTD. et al.) 02 November 2021 (2021-11-02) <br> description, paragraphs [0051]-[0097], and figures 1-3 | 1-7 |
| PX | CN 114063554 A (CCCC THIRD HARBOR ENGINEERING CO., LTD.) 18 February 2022 (2022-02-18) <br> claims 1-7, and description, paragraphs [0005]-[0085], and figures 1-5 | 1-7 |
| A | CN 113341868 A (CCCC THIRD HARBOR ENGINEERING CO., LTD.) 03 September 2021 (2021-09-03) <br> entire document | 1-7 |
| A | CN 113108762 A (CCCC THIRD HARBOR ENGINEERING CO., LTD.) 13 July 2021 (2021-07-13) <br> entire document | 1-7 |

☑ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **31 January 2023** | **07 February 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/130121**

**C.    DOCUMENTS CONSIDERED TO BE RELEVANT**

| Category* | Citation of document, with indication, where appropriate, of the relevant passages | Relevant to claim No. |
|---|---|---|
| A | CN 112127380 A (CNPC OFFSHORE ENGINEERING (QINGDAO) COMPANY LIMITED) 25 December 2020 (2020-12-25) entire document | 1-7 |
| A | CN 109653229 A (CCCC SHANGHAI THIRD HARBOR ENGINEERING SCIENCE & TECHNOLOGY RESEARCH INSTITUTE CO., LTD. et al.) 19 April 2019 (2019-04-19) entire document | 1-7 |
| A | WO 2013057095 A1 (WINDSEA AS) 25 April 2013 (2013-04-25) entire document | 1-7 |
| A | KR 20160059570 A (HYUNDAI ENGINEERING & CONSTRUCTION CO., LTD.) 27 May 2016 (2016-05-27) entire document | 1-7 |

Form PCT/ISA/210 (second sheet) (July 2022)

**INTERNATIONAL SEARCH REPORT**
Information on patent family members

International application No.

**PCT/CN2022/130121**

| Patent document cited in search report | | | Publication date (day/month/year) | Patent family member(s) | | | Publication date (day/month/year) |
|---|---|---|---|---|---|---|---|
| CN | 110080261 | A | 02 August 2019 | None | | | |
| CN | 113585362 | A | 02 November 2021 | None | | | |
| CN | 114063554 | A | 18 February 2022 | None | | | |
| CN | 113341868 | A | 03 September 2021 | None | | | |
| CN | 113108762 | A | 13 July 2021 | None | | | |
| CN | 112127380 | A | 25 December 2020 | None | | | |
| CN | 109653229 | A | 19 April 2019 | None | | | |
| WO | 2013057095 | A1 | 25 April 2013 | EP | 2769025 | A1 | 27 August 2014 |
| | | | | GB | 201117888 | D0 | 30 November 2011 |
| | | | | GB | 201218511 | D0 | 28 November 2012 |
| | | | | GB | 2495830 | A | 28 November 2012 |
| | | | | GB | 2495830 | B | 28 November 2012 |
| KR | 20160059570 | A | 27 May 2016 | KR | 101672595 | B1 | 04 November 2016 |

Form PCT/ISA/210 (patent family annex) (July 2022)